# EUROPEAN PATENT APPLICATION

(11) **EP 0 544 515 A1**
(43) Date of publication of application: **02.06.1993**
(21) Application number: 92310774.2
(22) Date of filing: 25.11.1992
(51) Int. Cl.: B01D 53/14

(54) **Process and apparatus for removing acid gas from a gas mixture**

(30) Priority: 25.11.1991 US 797752
(71) Applicant: EXXON CHEMICAL PATENTS INC., Florham Park New Jersey 07932 (US)
(72) Inventor: Ruziska, Philip A., Kingwood, Texas 77345 (US)
(74) Representative: Northover, Robert Frank

(57) **Abstract**

A process and apparatus for removing acid gas, such as carbon dioxide, from a gaseous composition. The gaseous composition is subjected to an absorption step, wherein it is contacted with a scrubbing solution incorporating a basic alkali metal compound, and a sterically hindered amine activator compound. Then, the solution is flashed to remove absorbed acid gas. Thereafter, the scrubbing solution is subjected to regeneration for additional removal of acid gas, and recycled to the absorption step.

## Description

### BACKGROUND OF THE INVENTION

### 1. Field of the Invention

This invention relates to an improved process for removing acidic components, particularly CO₂, from gaseous compositions containing such components.

### 2. Description of Material Information

It is well known in the art to treat gases and liquids, such as mixtures containing acidic gases, including CO₂, H₂S, SO₂, SO₃, HCN, COS, and oxygen and sulfur derivatives of C₁ to C₄ hydrocarbons, with amine solutions to remove these acidic gases. The amine usually contacts the acidic gases and the liquids as an aqueous solution containing the amine in an absorber tower, with the aqueous amine solution contacting the acidic fluid countercurrently.

The acid scrubbing processes known in the art can be generally broken into three categories.

The first category is generally referred to as the aqueous amine process, wherein relatively large amounts of amine solution are employed during the absorption. This type of process is often utilized in the manufacture of ammonia where nearly complete removal of the acid gas, such as CO₂, is desired. It is also used in those instances where an acid gas, such as CO₂, occurs with other acid gases or where the partial pressures of the CO₂, and other gases are low.

A second category is generally referred to as the non-aqueous solvent process. In this process, water is a minor constituent of the scrubbing solution and the amine is dissolved in the liquid phase containing the solvent. In this process, the amine comprises up to 50% of the liquid phase. This type of process is utilized for specialized applications where the partial pressure of CO₂ is extremely high and/or where many acid gases are present, e.g., COS, H₂S, CH₃SH and CS₂.

A third category, which is the most common process for removing CO₂ from synthesis gas in ammonia plants, is generally referred to as the aqueous base scrubbing process, or "hot potash" process. This type of process utilizes an aqueous solution of a basic compound, such as potassium carbonate, as a scrubbing solution to absorb the acid gas. The solution typically also contains a promoter, or activator, such as an amine, to enhance mass transfer rates.

This type of process is generally used where bulk removal of an acid gas, such as CO₂, is desired. This process also is applied to situations where the CO₂ and feed gas pressures are high. In such processes, useful results are achieved using aqueous potassium carbonate solutions and an amine activator.

The present invention pertains to an improved process for practicing this third category of acid scrubbing process, namely, the "hot potash" process.

A variety of systems have evolved for employing promoted solutions of the third category to remove acid gas. Such systems generally employ an absorption zone, or tower, where acid gases are absorbed by the promoted solution, and a regeneration zone, or tower, where acid gas is stripped from the promoted solution.

Preferably, the stripping is conducted with steam. Steam can be provided from an outside source; more commonly, steam is generated by heating solution at the bottom of the regeneration tower with a heat source, such as process gas.

These systems generally employ either one or two stage regenerators. With one stage regenerators, relatively "lean" solution (i.e., having about 20% by volume or less of the acid gas present in the "rich" solution exiting the bottom of the absorption tower, or absorber) is withdrawn from the bottom of the regenerator, or regeneration tower, and returned to the absorption tower; more specifically, this lean solution is preferably first split into a greater portion and a lesser portion, with the lesser portion being cooled, then returned to the top, or cleanup section, of the absorption tower. With two stage regenerators, a greater portion of "semi-lean" solution (i.e., having about 50% by volume of the acid gas present in the rich solution exiting from the bottom of the absorber) is withdrawn from an intermediate section of the regenerator; a lesser portion of lean solution is withdrawn from the bottom of the regenerator. Preferably, the semi-lean solution from the two stage regenerator is returned to the middle, or bulk, section of the absorption tower; the lean solution, to the cleanup section.

The capital cost of these acid scrubbing processes is generally controlled by the size of the absorption and regeneration towers, the size of the reboilers for generating stripping steam, and the size of the condensers which condense spent stripping steam so that condensate may be returned to the system to maintain proper water balance. The energy requirement for stripping acid gas from the scrubbing solution, sometimes expressed as cubic feet of acid gas removed per pound of steam consumed, is a significant part of the operating costs of the overall process.

Some means for reducing the costs in operating these industrial processes have focused on the use of chemical absorbents, or combinations thereof, to increase the efficiency of the "hot potash" process, thereby permitting significant reduction in the heat requirements for regeneration of scrubbing solution. Particularly suitable chemical agents for increasing efficiencies are the class of amino activators identified as "sterically hindered" amines. In this context, the term "sterically hindered" indicates the presence of at least one secondary amino group attached either to a secondary or tertiary carbon atom, or a primary amino group attached to a tertiary carbon atom.

US-A-4919904 and 4759866 disclose an aqueous gas scrubbing composition comprising one or more alkali metal salts (these being defined as including the hydroxides), and one or more primary sterically hindered amino acids, as defined in these two patents, and discussed later herein. US-A-4112050 discloses the use of an aqueous solution comprising a basic alkali metal salt or hydroxide and a sterically hindered diamine activator for removing acid gases from a gaseous mixture. The sterically hindered amines are defined to include aminoethers, aminoalcohols, di- and triamines. US-A-4112051 discloses the use of a sterically hindered diamine and a solvent for the amine, where the solvent is also an absorbent for the acidic gases. US-A-4112052 is also directed at scrubbing solutions utilizing sterically hindered diamines. US-A-4094957 is directed at the use of an aqueous solution comprising a basic salt, a sterically hindered diamine, and an aminoacid cosolvent, the aminoacid cosolvent serving to prevent phase separation of the aqueous solution. US-A-4100257 and 4101633 disclose the use of an amine mixture comprising a sterically hindered diamine and a tertiary amino alcohol for removal of acidic gases. US-A-4100257 also discloses the use of the amine mixture in combination with a solvent which is also a physical absorbent for the acidic gases.

Other means have focused on improvements to the design of, or addition of elements to, the system employed in the removal process.

US-A-4282193 and 4282194, which also disclose the use of sterically hindered diamine activator, address the problem of the undesirable conversion of this activator to cyclic urea during the operation of the process. These patents disclose the utilization of a thermal conversion unit, in conjunction with the absorber and regenerator, to convert at least a portion of the cyclic urea back to diamine activator.

The utilization of flashing in the removal process is another means employed to increase operating efficiency. Specifically, utilizing a flash drum to receive acid gas-rich scrubbing solution from the absorber, and to transfer solution to the regenerator after flashing, allows reductions in heat input required.

US-A-3725529 discloses the step of flashing carbon dioxide-rich solution exiting the absorber, prior to its introduction to the regenerator. The scrubbing solution is aqueous monoethanol amine or aqueous alkali carbonate, the latter of which may be activated; disclosed activators are arsenous acid, selenium and tellurium compounds, ethanol amine (with diethanol amine specifically mentioned), boric acid, and amino acids (with glycin specifically mentioned).

GB-A-1308197 also discloses utilization of a flashing step after absorption and prior to regeneration. Alkali assenite solutions, alkali metal carbonate solutions activated with glycine or diethanolamine, and solutions of ethanolamines, particularly monoethanoloamine, are disclosed as suitable scrubbing solutions.

Additional patents disclosing the inclusion of a flashing step between absorption and regeneration are US-A-3554690; 3630666; 3725252; 4106916; and 4184555. The scrubbing solutions employed are alkanolamine solutions.

It has been discovered, however, that the utilization of sterically hindered amine activators, together with a system employing intermediate flashing subsequent to absorption and prior to regeneration, provides for substantially increased energy savings over and above those resulting from either a system employing hindered amine activator without an intermediate flashing step or a system utilizing the intermediate flashing step, but not hindered amine.

It has further been discovered that, where the intermediate flashing step is conducted at a higher pressure than the regeneration step, the benefits accruing from such higher pressure flashing are increased where the activator is a sterically hindered amine activator. For instance, one benefit appurtenant to higher pressure flashing is that , where the CO₂ produced by flashing is utilized for urea synthesis, supplying the CO₂ for this synthesis at higher pressure reduces the CO₂ requirements. Where the activator present in the higher pressure flashing step is a sterically hindered amine activator, more CO₂ is obtained from the flashing step; consequently, the amount of CO₂ remaining in solution, and therefore requiring stripping, is reduced.

The scrubbing solution may be heated after leaving the absorption step, and prior to undergoing flashing. The heat may be supplied by any suitable means. For instance, the heat may be supplied from an outside, or independent source; alternatively, heat exchange may be employed, the heat being transferred to solution entering the flashing zone from solution returning to the absorption zone from regeneration.

It has yet further been discovered that flashing can similarly be utilized, in conjunction with bulk acid gas removal, upstream of an existing removal system to increase the capacity of an extant system.

In one aspect, the invention pertains to a process, for removing acid gas from a gaseous composition including at least one acid gas, comprising:
(a) contacting the gaseous mixture with a scrubbing solution in an absorption zone, to absorb at least a first amount of the acid gas, the scrubbing solution comprising:
   (i) at least one basic alkali metal compound; and
   (ii) at least one activator compound comprising at least one amino group selected from secondary amino groups attached to a secondary carbon atom, secondary amino groups attached to a tertiary carbon atom, primary amino groups attached to a tertiary carbon atom;
(b) transferring at least a portion of the scrubbing solution from the absorption zone to a flashing zone;
(c) flashing the scrubbing solution in the flashing zone to release at least a portion of the acid gas from the scrubbing solution;
(d) transferring at least part of the scrubbing solution from the flashing zone to a regeneration zone;
(e) stripping at least a portion of the acid gas from the scrubbing solution in the regeneration zone; and
(f) returning the scrubbing solution from the regeneration zone to the absorption zone.

In a preferred embodiment, step (d) of the process further comprises returning a second part of the scrubbing solution from the flashing zone to the absorption zone.

The absorption zone may comprise a cleanup zone for receiving the portion of scrubbing solution returned form the regeneration zone. The absorption zone may also comprise a bulk zone for receiving the portion of scrubbing solution returned from the flashing zone.

The regeneration zone may comprise only one regeneration section for stripping acid gas from scrubbing solution. As an alternative, the regeneration zone may include two or more such regeneration sections.

These sections can be in succession, with each succeeding section being positioned for receiving scrubbing solution from its immediately preceding section; preferably, such multisection regeneration zones are configured so that each succeeding regeneration zone can strip an additional amount of acid gas, from scrubbing solution which it receives from the preceding section. In a preferred embodiment of the process of the invention wherein a multisection regeneration zone is employed, the regeneration zone comprises a first regeneration section for stripping acid gas from scrubbing solution, and a second regeneration section - positioned to receive scrubbing solution from the first regeneration section - for stripping acid gas from scrubbing solution.

In step (d) of the embodiment of the process utilizing such a two-section regeneration zone, the indicated first amount of scrubbing solution, from the flashing zone, can be transferred to the second regeneration section, or, as an alternative, to the first regeneration section; in the former instance, stripping step (e) takes place only in the second regeneration section; in the former, acid gas will be stripped from the scrubbing solution in the first regeneration section, and additional acid gas will be stripped from the scrubbing solution in the second regeneration section.

The flashing step of the process of the invention may be conducted at a higher pressure than the stripping step. Where the CO₂ produced in the flashing step is to be compressed for further use, the flashing step is preferably conducted at a pressure from 138 to 355 kPa (20 to 50 psig); where the CO₂ product is not required for other uses, the flashing step of the process of the invention may be conducted at a minimum pressure, or at the pressure of the regenerator.

The stripping step may be conducted at a pressure of from 6.9 to 207 kPa (1 to 30 psig).

In another aspect, the invention relates to a process for removing at least one acid gas from a gaseous composition which comprises:
(a) contacting the gaseous composition with a scrubbing solution in a bulk removal zone to absorb at least a portion of the at least one acid gas,
(b) transferring at least a portion of the scrubbing solution from the bulk removal zone to a flashing zone,
(c) flashing the scrubbing solution in the flashing zone to release at least a portion of the at least one acid gas from the scrubbing solution;
(d) returning at least a portion of the scrubbing solution from the flashing zone to the bulk removal zone, and
(e) transferring the gaseous composition from the bulk removal zone to the absorption zone of a system for removing acid gas from a gaseous composition.

In the preferred embodiment, the scrubbing solution employed in the aspect of the invention comprises at least one basis alkali metal compound and at least one activator compound, as earlier discussed. The system to which the gaseous composition is transferred includes an absorption zone and a regeneration zone.

In the regeneration zone, a semi-lean portion of scrubbing solution is obtained by stripping an amount of acid gas from the scrubbing solution, and a lean portion of scrubbing solution is obtained by stripping an additional amount of acid gas from the scrubbing solution. The semi-lean portion of scrubbing solution is returned to the bulk zone of the absorption zone; the lean portion, to the cleanup zone.

Preferably, in the system to which the gaseous composition is transferred from the bulk removal section, the gaseous composition is contacted with scrubbing solution in the absorption zone, which comprises a cleanup zone and a bulk zone, to absorb at least a portion of the at least one acid gas. Subsequently, at least a portion of this scrubbing solution is transferred from the absorption zone to the regeneration zone.

The basic alkali metal compound utilized in the process of the invention may be one or more bicarbonates, carbonates, hydroxides, borates, phosphates, and mixtures thereof. A preferred alkaline metal compound for use with the invention is potassium carbonate.

Suitable activator compounds for the scrubbing solution include aminoethers, aminoalcohols, diamines, triamines, and amino acids, and mixtures thereof.

Preferred activator compounds include the amino acids represented by the formula: 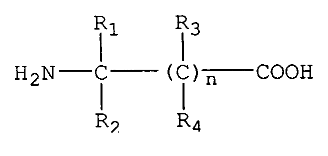
where R₁ and R₂ are independently selected from CH₃, C₂H₅, and C₃H₇; R₃ and R₄ are independently hydrogen and CH₃; and n is 0, 2, or 3.

Particular such amino acids which are suitable include 2-aminoisobutyric acid (AIBA), 2-amino-2-methyl butyric acid, and 4-amino-4-methyl pentanoic acid.

Another primary sterically hindered amino acid, which is a preferred activator compound for the process of the invention, is 1-amino-cyclopentane carboxylic acid.

Where the at least one activator compound is selected from the group consisting of aminoethers, aminoalcohols, diamines, and triamines, the scrubbing solution preferably also includes an amino acid. Preferably, the amino acid comprises 4 to 8 carbon atoms, the most preferred amino acid being pipecolinic acid.

The invention is also directed to an apparatus for removing acid gas from a gaseous composition including at least one such acid gas. In an aspect of the invention, this apparatus comprises:
(a) bulk removal means for contacting the gaseous composition with a scrubbing solution to absorb at least a portion of the acid gas;
(b) flashing means for receiving scrubbing solution from the bulk removal means, for flashing scrubbing solution to release at least a portion of the acid gas from the scrubbing solution, and for returning scrubbing solution to the bulk removal means; and
(c) a system for removing acid gas from a gaseous composition, this system comprising absorption means, for receiving the gaseous composition from the bulk removal means, and regeneration means.

In a preferred embodiment, the absorption means comprises means for contacting the gaseous composition with scrubbing solution to absorb at least a portion of the acid gas; the regeneration means comprises means for stripping at least a portion of the acid gas from the scrubbing solution, and for returning the scrubbing solution to the absorption means.

In a particularly preferred embodiment, the regeneration means further comprises a first section for stripping an amount of the acid gas from the scrubbing solution to form a semi-lean portion of scrubbing solution, and a second section for stripping an additional amount of the acid gas from the scrubbing solution to form a portion of lean scrubbing solution; additionally, the absorption means further comprises a bulk section and a cleanup section. In this embodiment, the apparatus of the invention preferably further comprises means for transferring semi-lean scrubbing solution from the indicated first section to the bulk section, and means for transferring lean scrubbing solution from the second section to the cleanup section.

The invention may be described, though only by way of illustration by reference to the accompanying drawings, in which:
Fig. 1 is a schematic flow diagram of an acid gas removal system, with one-stage regeneration, for an embodiment of the invention;
Fig. 2A is a schematic flow diagram of an acid gas removal system, with a two-stage regenerator, and without a flash drum;
Fig. 2B is a schematic flow diagram of an acid gas removal system, incorporating a flash drum and a two-stage regenerator;
Fig. 2C is a schematic flow diagram of an acid gas removal system, with a two-stage regenerator, for an embodiment of the invention;
Fig. 2D is a schematic flow diagram of an acid gas removal system, with a two-stage regenerator, for another embodiment of the invention;
Fig. 2E is a schematic flow diagram of an acid gas removal system, with a two-stage regenerator, for yet another embodiment of the invention; and
Fig. 3 is a schematic flow diagram of an acid gas removal system for another embodiment of the invention, utilizing a configuration incorporating bulk removal, flash, and recycle added upstream of an acid gas removal system to increase the system's capacity.

This invention is generally suitable for the removal of acid gas or gases from fluid compositions, particularly gaseous compositions. The acid gases, as discussed herein, are understood to include CO₂, as well as H₂S, SO₂, SO₃, CS₂, HCN, COS, and the oxygen and sulfur derivates of C₁ to C₄ hydrocarbons in various amounts as they frequently appear in gaseous compositions; except for CO₂ and H₂S, these gases normally are present only in small amounts within a gaseous mixture or feed.

This invention is generally suitable for the removal of acid gas or gases from fluid compositions, particularly gaseous compositions. Gaseous mixtures, such as synthesis gas mixtures, are especially appropriate for treatment in accordance with the invention.

For instance, the invention may be employed with mixtures of hydrogen and nitrogen, which are used for to make ammonia, and with mixtures of hydrogen and carbon monoxide, which are used for hydrocarbon syntheses. Treatment of hydrogen, which can be used for a variety of purposes, such as hydrotreating, is also suitable.

The foregoing compositions, and specifically identified acid gases, are discussed only as representative examples of compositions for treatment, and acid gases for removal, in accordance with the invention. It is emphasized that the utility of the invention is not limited thereto.

The absorbing solution utilized in the subject invention comprises an aqueous solution having a basic alkali metal compound selected from the group consisting of alkali metal bicarbonates, carbonates, hydroxides, borates, phosphates and their mixtures, the alkali metal compound preferably being present as from 10 to 40 weight percent of the entire weight of the solution. Most preferably, potassium carbonate is used in a concentration of 20 to 35 weight percent.

The activator composition, normally present in concentrations of 2 to 20 weight percent of the entire weight of the solution, comprises at least one compound containing at least one secondary amino group attached to either a secondary or tertiary carbon atom, or a primary amino group attached to a tertiary carbon atom.

Monoamines are not generally suitable as activators in the process of the instant invention because the lower members of the family are too volatile and the higher members have limited solubility. Monoaminoacids and monoaminoalcohols are much less volatile and much more soluble than the corresponding monoamines containing the same number of carbon atoms.

Preferred sterically hindered amine compounds for use in connection with the process and apparatus of the invention are those primary sterically hindered amino acids as disclosed in US-A-4919904 and 4759986.

Specifically, preferred activators include those amino acids represented by the formula 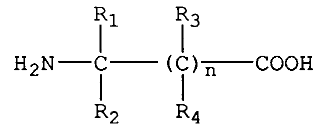
where R₁ and R₂ are independently selected from CH₃, C₂H₅, and C₃H₇; R₃ and R₄ are independently hydrogen and CH₃; and n is 0, 2, 3. Preferably, R₁ and R₂ are chosen independently from CH₃ and C₂H₅; more preferred is when both R₁ and R₂ are CH₃ and n is 0. It is noted that n cannot be 1 because beta amono acids in aqueous mediums undergo deamination, whereas alpha and gamma amino acids do not.

Particular such amino acids are 2-aminoisobutyric acid (AIBA), 2-amino-2-methyl butyric acid, and 4-amino-4-methyl pentanoic acid.

Another prepared primary sterically hindered amino acid is 1-amino-cyclopentane carboxylic acid.

Other sterically hindered amine compounds for use in connection with the process and apparatus of this invention are aminoethers, aminoalcohols, diamines, and triamines.

A suitable aminoether is 2(2-amino-2-methylpropoxy)ethanol. Suitable aminoalcohols include N-cyclohexyl-1,3-diamino-2-propanol, N(1,1 dimethyl-2-hydroxyethyl)-1,3-propanediamine, and 2,3-dimethyl-3-amino-1-butanol. N₂-isopropyl-4-methyl-2,4-pentanediamine, N-cyclohexyl-1,3 propanediamine (CHPD), and 2 ethylamino-2-methyl-4-aminopentane are suitable diamines, and 2,2-dimethyldiethylenetriamine and 2,2,5,5-tetramethyl-diethylenetriamine are suitable triamines.

The sterically hindered amines disclosed in US-A-4094957 and 4112050,
are suitable as activator compounds for this invention.

The preferred concentration of the subject activator is from 0.5 to 15 weight percent, and most preferably, from 1 to 10 weight percent.

No cosolvent need be used in conjunction with the previously discussed amino acids; however, regarding the indicated aminoethers, aminoalcohols, diamines, and triamines, it has been found that, while such activators improve the working capacity of acid scrubbers, the efficiency of the absorbing solutions declines in alkaline scrubbing systems at high temperatures and at low concentrations of the acid gas in the solution due to phase separation. Thus, in connection with use of aminoethers, aminoalcohols, diamines, and triamines as activators, at least one cosolvent is preferably also included in the absorbing or scrubbing solution, to prevent phase separation.

The preferred cosolvents are aminoacid cosolvents, with the more preferred being aminoacid cosolvents having from 4 to 8 carbon atoms; included among these are pipecolinic acid, N,N-dimethyl glycine, 3-amino-3-methyl butyric acid, and 2-amino-2-methyl-butyric acid. The most preferred is pipecolinic acid (PA). The aminoacid cosolvents disclosed in US-A-4094957 are suitable for use with this invention.

The content of the aminoacid cosolvent in the absorbing solution will range from 0.5 to 15 weight percent of the entire weight of the solution , with the preferred range being from 1 to 10 weight percent.

The absorbing solution of the invention may be further incorporate one or more of the additives common thereto, in conventional amounts. These include anti-foaming agents, corrosion inhibitors, etc.

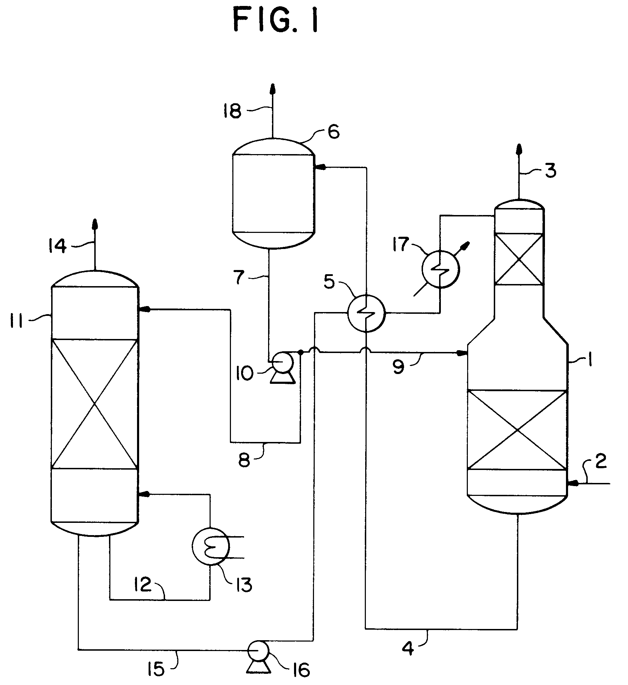

The invention is described with reference to Figs. 1-3.

Referring to Fig. 1, gaseous mixture is introduced into the base of absorber or scrubber 1 through line 2. The gaseous mixture is countercurrently contacted by scrubbing solution in scrubber 1, thereby removing CO₂ from the gaseous mixture. Gaseous mixture from which the acid gases have been largely removed exits through line 3 located at the top of scrubber 1.

The pressure in scrubber 1 may vary widely, depending upon the specifics of the system. Acceptable pressures may range between 34 and 13790 kPa (5 and 2000 psia), preferably 689.5 to 10342 kPa (100 to 1500 psia), and most preferably 1379 to 6895 kPa (200 to 1000 psia).

Preferably, the temperature of the absorbing solution during the absorption step is in the range of from 25°C to 200°C, and more preferably from 60°C to 130°C. The partial pressure of the acid gas, e.g., CO₂, in the feed mixture preferably will be in the range of from 0.69 to 3447.5 kPa (0.1 to 500 psia), and more preferably in the range of from 69 to 2758 kPa (10 to 400 psia).

The contacting takes place under conditions conducive to the absorption of the of the CO₂ by the absorbing solution. Generally, the countercurrent contacting by the absorbing solution to remove the acid gases lasts for periods ranging from 0.1 to 60 minutes, typically from 1 to 5 minutes.

Generally from 80% to 99.9% by volume of the CO₂ content of the gaseous mixture will be removed in scrubber 1.

CO₂-rich scrubbing solution is taken out from the bottom of scrubber 1 into transfer line 4. The removal of CO₂ from CO₂-rich scrubbing solution is facilitated by high solution temperature. Accordingly, heat exchanger 5 may be employed to transfer heat from scrubbing solution in line 15 to scrubbing solution in line 4.

CO₂-rich scrubbing solution enters flash drum 6 and from line 4; in flash drum 6, CO₂-rich scrubbing solution is flashed to remove CO₂ from the scrubbing solution, without application of external heat. CO₂ is removed through the top of flash drum 6 in line 18.

Flash drum 6 is operated at a pressure of between about 1 and about 50 psig; more specifically, the range of pressure which is appropriate depends upon whether the CO₂ obtained therefrom is to be compressed and employed elsewhere. If so, flash drum 6 is operated at a pressure within the range of from 138 to 345 kPa (20 to 50 psig); if not, flash drum 6 is operated at a pressure preferably from 6.9 to 207 kPa (1 to 30 psig), and most preferably from 34 to 138 kPa (5 to 20 psig).

At least 80% by volume of the CO₂ present in the rich scrubbing portion is removed in the flashing step. Preferably, at least 85% by volume is removed.

Scrubbing solution with the substantial portion of CO₂ removed is taken out of flash drum 6 through line 7. Pump 10 drives the flashed scrubbing solution through line 7; one portion of this solution is thusly sent through line 8, to regenerator 11 at or near the top thereof, and another portion is recirculated to the bulk section of absorber 1, through line 9.

In regenerator 11 - which is a one-section, or stage, regenerator - the solution is subjected to desorption, or stripping, to further remove CO₂. The stripping is accomplished by any suitable method; preferably, steam is used to strip the CO₂ from the scrubbing solution.

Steam is preferably supplied to regenerator 11 by means of circulating scrubbing solution, in line 12, through reboiler 13, and back into the bottom of regenerator 11. Steam may alternatively, or additionally, be supplied from an outside source. Steam carrying stripped CO₂ is removed through the top of regenerator 11 in line 14.

During desorption, or stripping, the temperature of the solution is maintained at from 100°C to 200°C, preferably from 100°C to 125°C. As with the absorber, the pressure at which the regenerator is maintained may vary widely, depending upon the specifics of the system. Pressure may range between 6.9 and 345 kPa (1 and 50 psig), preferably 34 to 207 kPa (5 to 30 psig).

Stripped solution is removed through the bottom of regenerator 11 in line 15, through which it is carried back to the top, or cleanup section, of absorber 1. Pump 16 facilitates this return of solution to absorber 1; heat exchanger 17 controls the temperature of the solution entering into absorber 1.

Systems characterized by two-section regenerators are also appropriate for the invention as set forth herein. One means for obtaining a two-section regenerator system of the invention is by modification of an existing system utilizing a two-section regenerator.

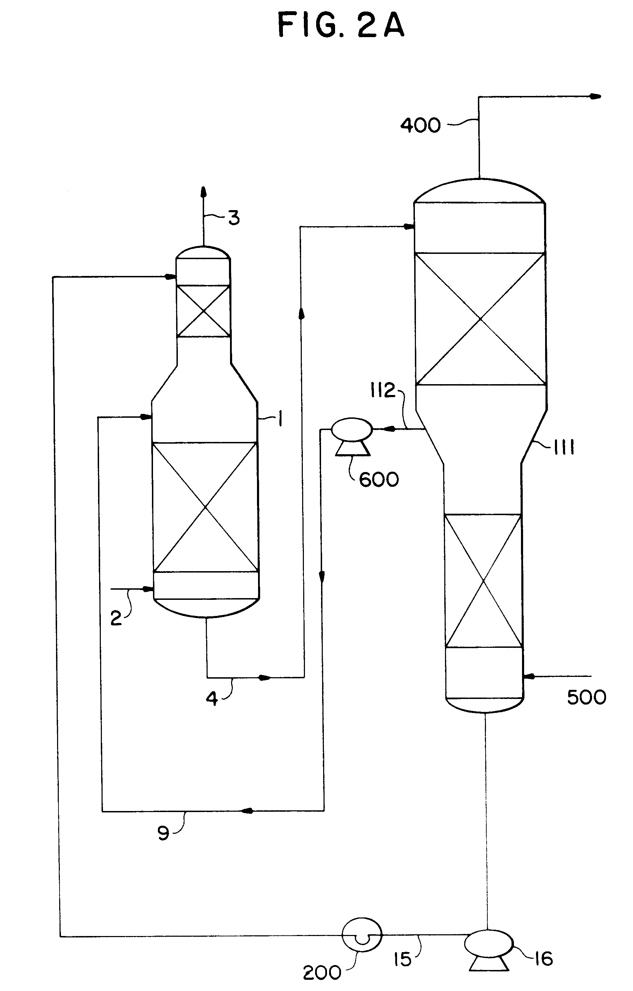

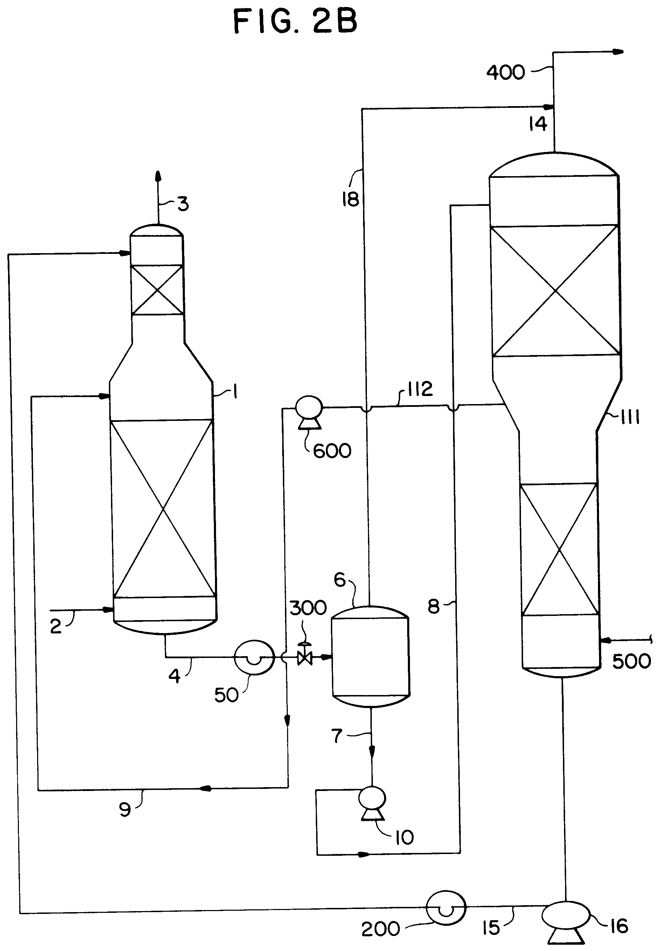

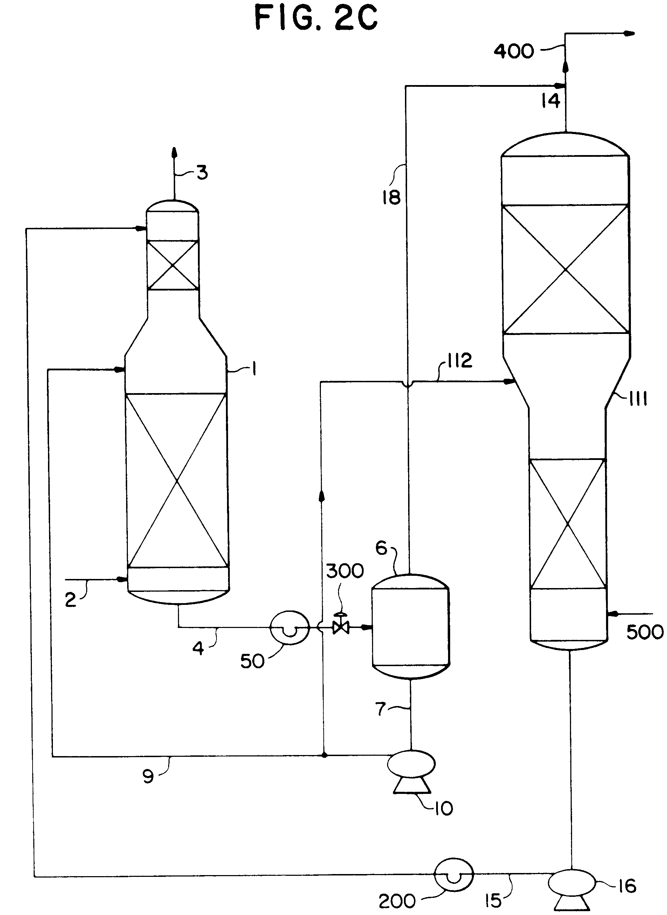

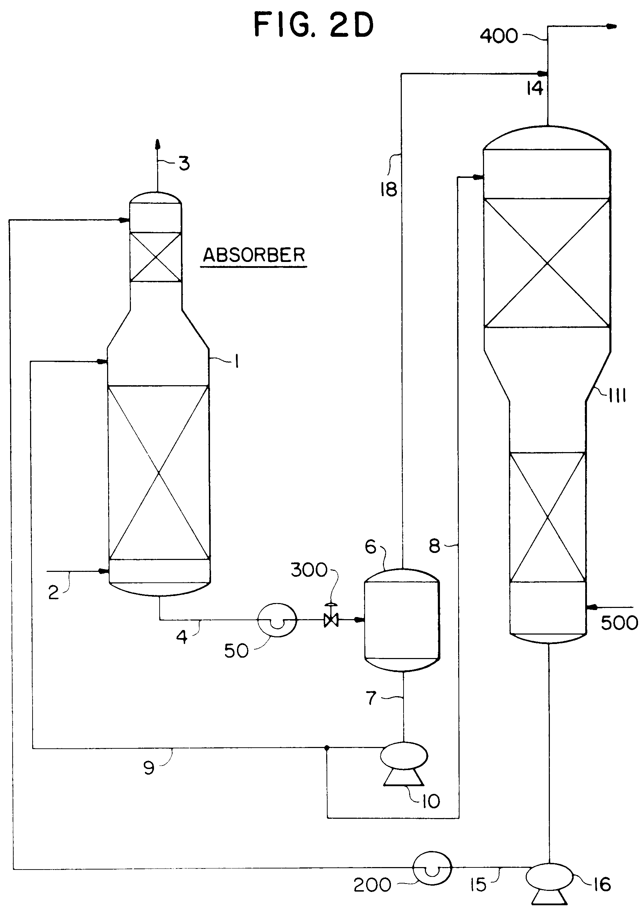

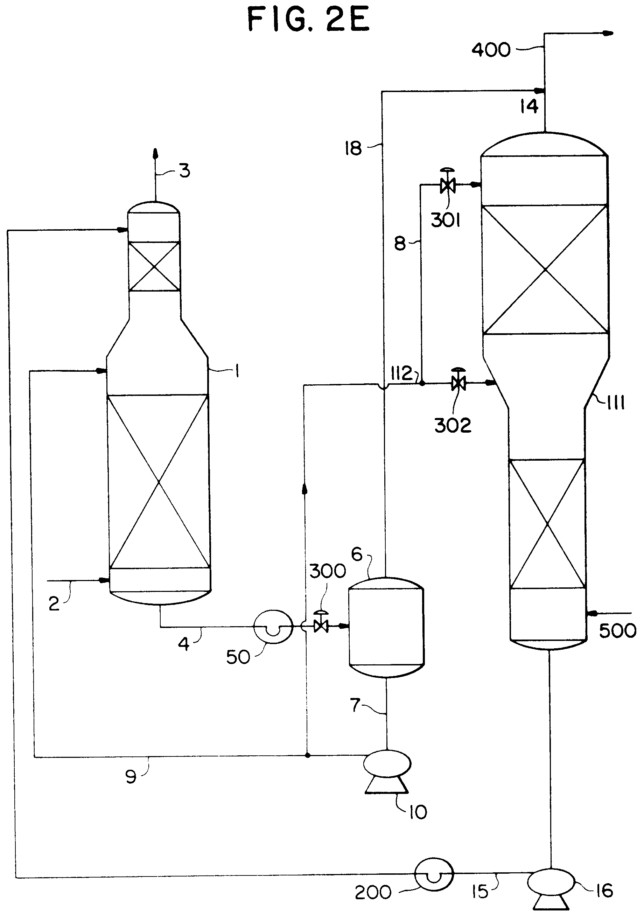

Two representative examples of systems which can be modified in accordance with the invention are shown in Figs. 2A and 2B; two examples of systems thusly modified, i.e., in accordance with the invention, are shown in Figs. 2C and 2D. The systems of Figs. 2C and 2D can each be obtained by modification, of either of Fig. 2A system or the Fig. 2B system, or, indeed, of any system into which the requisite modifications can be incorporated.

Fig. 2A shows a system with no flash drum. Transfer line 4 carries CO₂-rich scrubbing solution, from the bottom of scrubber 1, directly to the upper section of two-section regenerator 111, at or near the top of this regenerator. Partially regenerated scrubbing solution is withdrawn from regenerator 111 through line 112, and driven by pump 600 into line 9, wherein it flows to the bulk section of absorber 1.

Fig. 2B shows a system including a flash drum; as in the system of Fig. 2A, partially regenerated scrubbing solution is sent from regenerator 111 to absorber 1, utilizing pump 600, and lines 112 and 9. However, in contrast to the system of the invention shown in Fig. 1 -wherein one portion of the flashed scrubbing exiting flash drum 6 through line 7 flows to the regenerator through 8, and another portion is recirculated to absorber 1 through line 9 - there is no connection between lines 7 and 9 in the system of Fig. 2B; accordingly, scrubbing solution from flash drum 6 is not sent back to absorber 1, but only transferred to regenerator 111, through line 8.

The system of the invention shown in Fig. 2C incorporates line 112, like the systems shown in Figs. 2A and 2B; however, in the Fig. 2C system, line 112 carries scrubbing solution in the opposite direction from these systems. Specifically, in being driven by pump 10 in the Fig. 2C system, one portion of the flashed scrubbingsolution, which enters line 7 from flash drum 6, is sent back to absorber 1 through line 9, and enters the bulk section of this scrubbing element; another portion enters line 112, and flows therethrough to the middle of regenerator 111.

The system of the invention shown in Fig. 2D incorporates line 8, like the system of Fig. 2B; unlike the Fig. 2B system, line 7 of the Fig. 2D system of the invention has line 7 connected to line 9, as well as to line 8. Accordingly, pump 10 drives one portion of the flashed scrubbing solution through line 9, to the bulk section of absorber 1, and another portion to the top of regenerator 111.

Also within the scope of the invention is a two-section regenerator system combining the functions of the systems of Figs. 2C and 2D - i.e., having lines for carrying scrubbing solution from the flash drum to either of the middle or top of the two-section regenerator. This embodiment of the two-section regenerator system of the invention is further provided with appropriate means for allowing one or both of these lines to be closed off; suitable for such means are valves, and any other flow direction controlling means, as are known to those of ordinary skill in the art.

Such flow direction controlling means can be utilized selectively to open and close the indicated lines, leading to the middle and top of the two-section regenerator. Accordingly, this system can be operated either in the manner of the Fig. 2C system, or in the manner of the Fig. 2D system.

The system of Fig. 2E is an appropriate example of this embodiment. This system is provided with line 112, in the manner of the Fig. 2C system, as well as line 8, which, in the Fig. 2E system, leads from line 112 to the top of regenerator 111.

Further included in this system are valves 301 and 302, serving as flow direction controlling means, in the manner as described above. With valve 301 closed and valve 302 left open, the system of Fig. 2E will operate in the manner of the Fig. 2C system; conversely, with valve 302 closed and valve 301 left open, this system will operate like that shown in Fig. 2D.

The systems of Figs. 2A-2E are characterized by additional variations in design from the Fig. 1 system. Steam to regenerator 111 in these systems is supplied by an independent source not shown, through line 500, although, in the alternative, the recirculation and reboiling configuration utilized in the Fig. 1 system is also appropriate for the systems of Figs. 2A-2E.

Further, these systems have additional cooling means 200, for solution returned to absorber 1. This element may also be utilized in system of Fig. 1.

In the systems of Figs 2B-2E, heat is supplied to CO₂-rich scrubbing solution, by independent heat source 50, prior to entering flash drum 6. However, heat exchange, in the manner as employed in the Fig. 1 system, is appropriate for these systems as well.

Additionally, as to the systems of Figs. 2B-2E, CO₂ removed from flash drum 6 combines with CO₂ stripped in regenerator 111 to exit these systems, in line 400; further, valve 300 is provided, to control the flow of rich solution to the flashing step. These elements may also be utilized in the system of Fig. 1.

The systems of Figs. 2C and 2D are each characterized by respective advantages and disadvantages, relative to one another. These same advantages and disadvantages apply to the Fig. 2E system, depending upon whether it is operated in the manner of the Fig. 2C system, or the Fig. 2D system.

The advantage of the Fig. 2D system is that where flashed solution is transferred to regenerator 111 through line 8, instead of, as in the Fig. 2C system, through line 112, then both sections of regenerator 111 come into use in the stripping function. As a result, additional CO₂ stripping volume is provided to regenerate lean solution, with a minimum amount of stripping steam input.

However, where this Fig. 2D system of the invention is obtained from modifying a system incorporating a flash drum, such as the system of Fig. 2B, then the disadvantage of the Fig. 2D system is that regenerator 111 requires modification, in order to function properly with a lower flow rate of flashed scrubbing solution than that for which it was originally designed. The reason for the lower flow rate, in the Fig. 2D system, of flashed scrubbing solution to regenerator 111, is that, in the unmodified system, all of the flashed scrubbing solution is sent to regenerator 111 through line 8; in contrast, in the Figs. 2D system of the invention, a portion of this flow from line 7 is recirculated to absorber 1 through line 9, leaving less scrubbing solution to enter regenerator 111 through line 8.

With such reduced flow rate of flashed scrubbing solution, the upper section of the modified system of the invention, such as that shown in Fig. 2D, must itself be modified, so that proper contacting of the scrubbing solution will ensue. Without the proper modification to regenerator 111, the scrubbing solution received at the top thereof will simply flow down the sides of the tower, thereby rendering regenerator 111 less effective for its intended purpose of removing acid gas from the scrubbing solution.

The requisite modification to regenerator 111 is effected by changing the vapor rate and the liquid rate. Such changes are brought about by conventional means, such as altering the distributor trays, and the size of the packing in the upper section of regenerator 111; for instance, it is appropriate to use smaller size packing, to provide adequate contacting with the reduced flow.

Suitable means for achieving the necessary changes to render the regenerator suitable for the resulting lessened flow rate are known to those of ordinary skill in the art. The requisite modification to the regenerator, to render it effective for its intended purpose, can be accomplished readily by those of ordinary skill in the art, without undue experimentation.

The Fig. 2C system of the invention provides an advantage not available with the system of Fig. 2D, in not requiring such modification to regenerator 111. The flow rate of flashed scrubbing solution with the Fig. 2C system, as with the system of Fig. 2D, is less than with the prior art system from which it is modified; however, with the Fig. 2D system, the flashed scrubbing solution from flash drum 6 is divided, not between line 9 and line 8, as in the Fig. 2C system, but instead between line 9 and line 112.

Accordingly, in the Fig. 2C system, the upper section of regenerator 111 is not being used, and therefore does not require alteration. The lower section of regenerator 111 is originally configured for a lower flow rate than the upper section, and is accordingly suitable, without modification, for the lower flow rate entering regenerator 111 through line 112.

However, such nonuse of the regenerator upper section is a disadvantage of the Fig. 2C system, as compared with the system of Fig. 2D, for the reason as previously discussed with respect to the stated advantage of the Fig. 2D system, Specifically, the additional acid gas stripping volume, available where both regenerator sections are in use, is not obtained with the system of Fig. 2C.

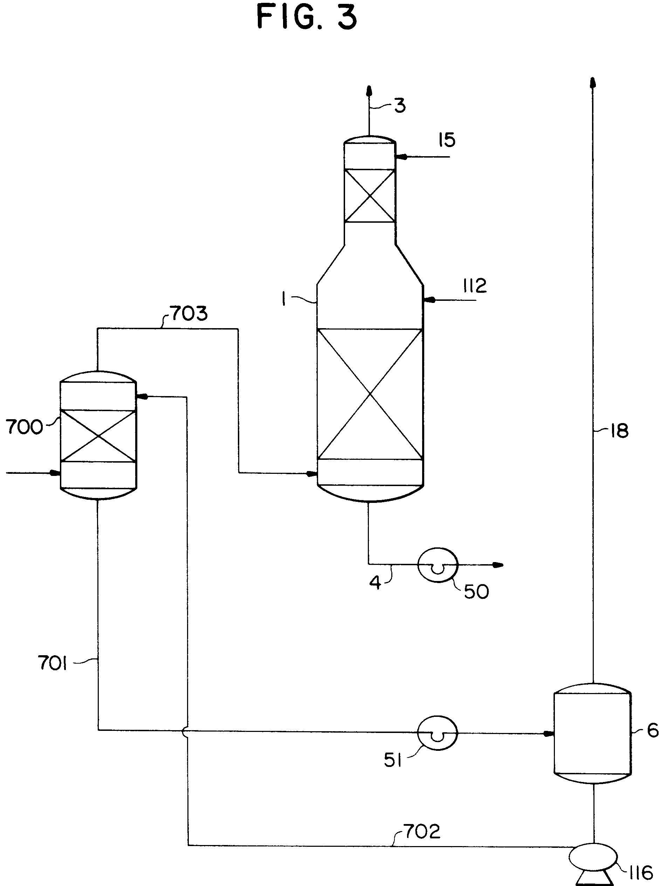

Fig. 3 shows another variation of the system of the invention, utilizing a flashing step to reduce heat input requirements; this variation provides for adding elements to an existing system to increase plant capacity. In the particular existing system represented in Fig. 3, semi-lean solution enters the bulk section of scrubber 1 through line 112, and lean solution enters the scrubber cleanup section through line 15; both the semi-lean and lean solution are transmitted to scrubber 1 directly from a regenerator, not shown. CO₂-rich scrubbing solution, from the bottom of scrubber 1, is transmitted directly to this regenerator through line 4.

One of the indicated added elements is bulk removal section 700, which can be located upstream of absorber 1, to provide an initial step for contacting gaseous mixture with scrubbing solution. Bulk removal section 700 can be any appropriate system or device, among those known in the art, for providing this step; for instance, another absorber, like absorber 1, is suitable.

Solution carrying CO₂ is removed to flash drum 6 through line 701, and carried through line 702 back to bulk removal section 700. Gaseous mixture is taken from the top of bulk removal section 700 through line 703, and carried to absorber 1.

The added configuration of bulk removal section and flash drum provided in this variation is particularly suitable for existing acid gas removal systems which employ transfer of solution directly between the absorber and the regenerator. It is understood, however, that this configuration may be incorporated into any acid gas removal system utilizing a regenerator and an absorber, including both systems utilizing direct transfer between regenerator and absorber, as well as those also employing an intermediate flash step, such as the systems shown in Figs. 1 and 2.

It is further understood that although the invention has been specifically described with reference to particular means and embodiments, the foregoing description is that of preferred embodiments of the invention. The invention is not limited to the particulars disclosed, but extends to all equivalents and various changes and modifications may be made in the invention without departing from the spirit and scope thereof.

## Claims

1. A process for removing acid gas from a gaseous composition including at least one acid gas, said process comprising:
(a) contacting said gaseous mixture with a scrubbing solution in an absorption zone, to absorb at least a portion of the acid gas, said scrubbing solution comprising:
(i) at least one basic alkali metal compound; and
(ii) at least one activator compound comprising at least one amino group selected from secondary amino groups attached to a secondary carbon atom, secondary amino groups attached to a tertiary carbon atom, and primary amino groups attached to a tertiary carbon atom;
(b) transferring at least a portion of said scrubbing solution from said absorption zone to a flashing zone;
(c) flashing said scrubbing solution in said flashing zone to release at least a portion of the acid gas from said scrubbing solution;
(d) transferring at least part of said scrubbing solution from said flashing zone to a regeneration zone; and
(e) stripping at least a portion of the acid gas from said scrubbing solution in said regeneration zone; and
(f) returning said scrubbing solution from said regeneration zone to said absorption zone.

2. The process as claimed in claim 1, wherein step (d) additionally comprises returning a second part of said scrubbing solution from said flashing zone to said absorption zone.

3. The process as claimed in claim 2, wherein said absorption zone comprises a cleanup zone, to which scrubbing solution is returned from said regeneration zone, and a bulk zone to which scrubbing solution is returned from said flashing zone.

4. The process as claimed in claim 2 or claim 3, wherein said regeneration zone comprises a first regeneration section for stripping acid gas from scrubbing solution, and a second regeneration section for stripping acid gas from scrubbing solution from said first regeneration section, and step (d) comprises transferring scrubbing solution from said flashing zone to said second regeneration section, and step (e) comprises stripping acid gas, from said scrubbing solution, either only in said second regeneration section or in both regeneration sections.

5. The process as claimed in any of claims 1 to 4, further comprising the step of heating scrubbing solution passing from said absorption zone to said flashing zone.

6. The process as claimed in claim 5, in which heat is transferred from scrubbing solution returning from said regeneration zone to said absorption zone, to scrubbing solution passing from said absorption zone to said flashing zone.

7. The process as claimed in any of claims 1 to 6, wherein at least one activator compound is represented by the formula: 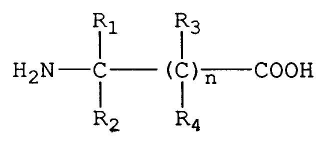 where R₁ and R₂ are independently selected from CH₃, C₂H₅, and C₃H₇; R₃ and R₄ are independently hydrogen and CH₃; and n is 0, 2, or 3.

8. The process as claimed in any of claims 1 to 7, wherein the activator compound comprises 2-aminoisobutyric acid, 2-amino-2-methyl butyric acid, 4-amino-4-methyl pentanoic acid, 1-amino-cyclopentane carboxylic acid or pipecolinic acid.

9. The process as claimed in any of claims 1 to 8, wherein step (c) is conducted at a higher pressure than step (e).

10. The process as claimed in any of claims 1 to 9, wherein step (a) is conducted at a pressure of from 1379 to 6895 kPa, and at a temperature of from 60°C to 130°C.

11. The process as claimed in any of claims 1 to 10, wherein step (c) is conducted at a pressure of from 138 to 355 kPa.

12. The process as claimed in any of claims 1 to 11, wherein step (e) is conducted at a pressure of from 6.9 to 207 kPa.

13. A process for removing acid gas from a gaseous composition including at least one acid gas, said method comprising:
(a) contacting said gaseous composition with a scrubbing solution in a bulk removal zone to absorb at least a portion of the acid gas, said scrubbing solution comprising:
(i) at least one basic alkali metal compound; and
(ii) at least one activator compound comprising at least one amino group selected from secondary amino groups attached to a secondary carbon atom, secondary amino groups attached to a tertiary carbon atom, and primary amino groups attached to a tertiary carbon atom;
(b) transferring at least a portion of said scrubbing solution from said bulk removal zone to a flashing zone;
(c) flashing said scrubbing solution in said flashing zone to release at least a portion of the acid gas from said scrubbing solution.
(d) returning at least a portion of said scrubbing solution from said flashing zone to said bulk removal zone; and
(e) transferring said gaseous composition from said bulk removal zone to the absorption zone of a system for removing acid gas from a gaseous composition, said system comprising an absorption zone and a regeneration zone.

14. The process as claimed in claim 13, wherein the portion of said process taking place in said system comprises:
(a) contacting said gaseous composition with said scrubbing solution in said absorption zone to absorb at least a portion of said at least one acid gas, said absorption zone comprising a cleanup zone and a bulk zone;
(b) transferring at least a portion of said scrubbing solution from said absorption zone to said regeneration zone;
(c) stripping an amount of said at least one acid gas from said scrubbing solution, to form a semi-lean portion of scrubbing solution;
(d) returning said semi-lean portion of scrubbing solution from said regeneration zone to said bulk zone;
(e) stripping an additional amount of said at least one acid gas from said scrubbing solution, to form a lean portion of scrubbing solution; and
(f) returning said lean portion of scrubbing solution to said cleanup zone.

15. The process as claimed in claim 13 or claim 14, wherein the activator compound is as defined in claim 7 or claim 8.

16. An apparatus for removing acid gas from a gaseous composition including at least one acid gas, said apparatus comprising:
(a) bulk removal means for contacting said gaseous composition with a scrubbing solution to absorb at least a portion of the acid gas;
(b) flashing means for receiving scrubbing solution from said bulk removal means, for flashing scrubbing solution to release at least a portion of the acid gas from said scrubbing solution, and for returning scrubbing solution to said bulk removal means; and
(c) a system for removing acid gas from a gaseous composition, said system comprising absorption means for receiving said gaseous composition from said bulk removal means, and regeneration means.

17. The apparatus as defined by claim 16, wherein:
(a) said absorption means comprises means for contacting said gaseous composition with scrubbing solution to absorb at least a portion of said the acid gas; and
(b) said regeneration means comprises means for stripping at least a portion of the acid gas from said scrubbing solution, and for returning scrubbing solution to said absorption means.

18. The apparatus as defined by claim 17, wherein:
(a) said regeneration means further comprises:
(i) a first section for stripping an amount of the acid gas from said scrubbing solution to form a semi-lean portion of scrubbing solution; and
(ii) a second section for stripping an additional amount of the acid gas from said scrubbing solution to form a lean portion of scrubbing solution; and
(b) said absorption means further comprises a bulk section and a cleanup section;
said apparatus further comprising:
(c) means for transferring semi-lean scrubbing solution from said first section to said bulk section; and
(d) means for transferring lean scrubbing solution from said second section to said cleanup section.
